# EUROPÄISCHE PATENTANMELDUNG

(11) **EP 1 203 746 A1**
(43) Veröffentlichungstag der Anmeldung: **08.05.2002**
(21) Anmeldenummer: 00124054.8
(22) Anmeldetag: 05.11.2000
(51) Int. Cl.: B67D 3/00, B67D 3/04, C12L 9/00

(54) **Getränkebehälter mit aktiv begrenzter Luftströmung und begrenztem Umgebungsluftkontakt**

(71) Anmelder: WOLFGANG JOBMANN GMBH, 22587 Hamburg (DE)
(72) Erfinder: Jobmann, Wolfgang, 22587 Hamburg (DE)
(74) Vertreter: Leonhard, Frank Reimund, Dipl.-Ing.

(57) **Zusammenfassung**

Es soll eine eventuelle Kontamination oder Geschmacksbeeinträchtigung eines Getränks in einem Behälter weitestgehend vermieden werden, ohne Einsatz eines Sterilfilters und ohne Einsatz einer flexiblen Abdeckung, um damit die Reinigungsproblematik zu erleichtern. Dazu wird ein Behälter für das flüssige Getränk (G) mit einem einen Innenraum (38) bildenden Rumpf (41) vorgeschlagen, der mit einem Deckel (39) verschlossen ist und im unteren Bereich eine Entnahmeöffnung (41b) aufweist, die mit einem Entnahmeventil (32) versehen ist, das zur Entnahme des Getränks geöffnet und ansonsten geschlossen ist. Dem Behälter, insbesondere dem Deckel (39), ist ein weiteres Ventil (30) zugeordnet, das bei geöffnetem Entnahmeventil (32) den Durchtritt von Luft zum Innenraum (38) freigibt (3) und bei geschlossenem Entnahmeventil (32) den Durchtritt von Luft zum Innenraum sperrt (2).

## Beschreibung

Die Erfindung befaßt sich mit einem Behälter für ein flüssiges Getränk, das über ein Entnahmeventil dosiert entnommen werden kann (Anspruch 1). Ebenfalls betroffen ist ein Betriebsverfahren für einen solchen Behälter (Anspruch 30) und ein Zuströmventil (Anspruch 20), das mit dem Behälter verbunden wird.

Getränkebehälter nehmen das zu dosierende Getränk in einem großen Volumen auf. Dieses Getränkevolumen wird über das Ventil dosiert und in zeitlichen Abständen entnommen, wobei im Innenraum durch das Absinken der Oberfläche des Getränks ein Unterdruck entstehen würde, wenn nicht eine Luftströmung zum Innenraum ermöglicht wird. Diese Luftströmung kann bei einem starren Deckel des Getränkebehälters über eine Dichtung und einen Sterilfilter erfolgen, vgl. eP 793 618 B1 (dort Anspruch 6). Es können auch flexible Deckel oder Membrane Verwendung finden, die einen ständigen Luftabschluß ermöglichen und dem Absinken der Oberfläche des Getränkes folgen und so einen Unterdruck vermeiden. Beide Alternativen haben Vorzüge, allerdings auch Nachteile. Ein Sterilfilter läßt einen (wenn auch nur keimfreien) ständigen Luftaustausch zwar zu, muß aber jährlich ausgetauscht werden, was kostenintensiv ist und die Gefahr erhöht, daß das Personal beim Austausch den Filter mit Wasser reinigt und ihn damit unbrauchbar macht. Die Verwendung eines flexiblen Deckels wirft in der Praxis Reinigungsprobleme und damit auch Hygieneprobleme auf. Die Verwendung von Einwegdeckeln ist kostenmäßig ungünstig und unter Umweltaspekten nicht vorteilhaft.

Die Erfindung geht von dem **technischen Problem** aus, eventuelle Kontamination oder Geschmacksbeeinträchtigung des Getränks im Behälter weitestgehend zu vermeiden, ohne Einsatz eines Sterilfilters und ohne Einsatz einer flexiblen Abdeckung, um damit die Reinigungsproblematik zu erleichtern.

Gelöst wird das Problem mit einem zusätzlichen Ventil am Behälter, insbesondere im Deckelbereich des Behälters, das nur während einer Entnahme des Getränks das dem entnommenen Volumen entsprechende Luftvolumen zum Druckausgleich nachströmen läßt und anschließend Luftabschluß herstellt. Vom Ergebnis her entspricht diese Lösung einer mit einem Getränk gefüllten, verschlossenen Flasche, aus welcher eine gewissen Teilmenge entnommen wird und danach die Flasche wieder verschlossen wird. Für die Dauer des Lagerns des Getränkes besteht also weiterhin Luftabschluß, nur für die demgegenüber sehr kurze Dauer des Entnehmens des Getränkes, strömt die Luft in den Kopfraum (Innenraum) des Behälters ein, wozu das weitere Ventil eine Öffnung zur Umgebung freigibt, die nach Abschluß der Getränkeentnahme wieder selbsttätig verschlossen wird.

Der Behälter mit dem weiteren Ventil arbeitet so, daß bei geöffnetem Entnahmeventil der Durchtritt von Luft zum Innenraum freigegeben wird. Diese Freigabe geschieht zeitverzögert (Anspruch 2), gekoppelt über den Innendruck im Kopfraum, der bei einer Entnahme des Getränks absinkt und ein Öffnen des weiteren Ventils veranlaßt (Anspruch 30,31). Nach einem Schließen des Entnahmeventils schließt auch das weitere Ventil und sperrt den weiteren Durchtritt von Luft ebenso, wie es einen völligen Luftabschluß für das weiterhin im Behälter befindliche Getränk erneut herstellt (Anspruch 1). Zwar sind die beiden Ventile, das Entnahmeventil für die Flüssigkeit und das Strömungsventil für das Zuströmen von Außenluft zum Innenraum um Druckausgleich herzustellen, voneinander unabhängig und jeweils eigenständig. Sie sind aber über den Innendruck miteinander so gekoppelt, daß ein Öffnen des einen Ventils zu einem Öffnen des weiteren Ventils führt und ein Schließen des Entnahmeventils zu einem Schließen des weiteren Ventils führt.

Diese Kopplung wird dann erreicht, wenn sich Flüssigkeit im Behälter befindet, sprich: der Behälter mit einem Getränk gefüllt ist. Findet sich keine Flüssigkeit im Behälter, kann ein Öffnen des Entnahmeventils nicht dazu führen, daß eine Kopplung über das Absinken des Innendrucks vor sich geht, so daß der Gegenstand der Erfindung in Verbindung mit dieser Kopplung zwar beschrieben wird, aber nicht darauf beschränkt ist, daß nur ein mit Flüssigkeit gefüllter Behälter vom Anspruch 1 umschrieben sein soll, sondern auch ein solcher Behälter, der noch keine solche Flüssigkeit beinhaltet, aber die Fähigkeit und Möglichkeit besitzt, im gefüllten Zustand den beschriebenen Funktionszusammenhang bereitzustellen.

Das Zuströmventil (Anspruch 20) enthält zwei Rohrsegmente und eine Kammer, die miteinander in Strömungsverbindung stehen. In der Kammer ist ein gekrümmter Boden vorgesehen, der eine Durchtrittsöffnung für die zuströmende Luft bildet, wenn der Sperrkörper, der diese Öffnung verdeckt, beiseite gerollt ist, was durch den Unterdruck veranlaßt wird. Endet der Zeitraum des Unterdrucks, ist also vollständiger Druckausgleich wieder hergestellt, sorgt die Schwerkraft dafür, daß der Sperrkörper die Öffnung erneut verschließt (Anspruch 15). Um dieses Verschließen sicherzustellen, ist der Sperrkörper in seiner Abmessung größer ausgestaltet, als die Öffnung, auf der anderen Seite ist der Sperrkörper mit seinem größten Maß kleiner als die Kammer, um darin beweglich zu bleiben (Anspruch 20, 19).

Das beschriebenen Ventil besitzt so die Eigenschaft und Eignung, Luft zwar zuströmen zu lassen, den Zustrom aber auch unterbinden zu können und dabei für einen Luftabschluß zu sorgen. Das Ventil wird dicht im Deckel so angeordnet, daß keine zusätzliche Luftströmung außer derjenigen durch die vom Sperrkörper gesteuerte Öffnung möglich ist. Dazu können weitere Abdichtungen vorgesehen sein, die den Bereich zwischen Deckel und Rumpf luftdicht verschließen, bei aufgesetztem Deckel auf den Rumpf, der das Getränk aufnimmt (Anspruch 10, 11).

Der den Rumpf verschließende Deckel braucht nicht flexibel zu sein und Beutel oder Membrane mit elastischer Nachgiebigkeit können als Wandabschluß entfallen (Anspruch 9).

Das zuströmende Luftvolumen ist begrenzt, sowohl hinsichtlich der Menge, wie auch hinsichtlich der Zeitspanne, koordiniert mit dem Öffnen des Entnahmeventils. Der Kontakt mit der Umgebungsluft wird auf diese Weise deutlich eingeschränkt und ein Qualitätsabbau (Aromaverlust) durch einen ständigen Luftaustausch (Luftzugang) kann vermieden werden.

In der bevorzugten Ausgestaltung ist der Sperrkörper kugelförmig oder walzenförmig, um selbsttätig durch die Schwerkraft auf die Öffnung zurückzurollen (Anspruch 14). Soweit das Maß oder die Abmessung angesprochen werden, bezieht sich diese bei einer Kugel auf den Durchmesser, ebenso wie auf den Durchmesser bei einer zugehörigen kreisrunden Öffnung, die von der Kugel verschlossen wird (Anspruch 4). Beim Öffnen des Entnahmeventils sorgt der entstehende Unterdruck für ein Beiseiterollen der Kugel oder Walze (Anspruch 3), so daß ein Abschnitt der Öffnung geöffnet wird. Es muß nicht die gesamte Öffnung für das Nachströmen der Luft freigelegt werden, es kann sich sogar eine Schwingung durch die Bewegung der Kugel ergeben.

Der Boden der Kammer, in der die Walze oder Kugel als Sperrkörper beweglich angeordnet ist, ist gekrümmt, um das selbsttätige Zurückrollen auf die Öffnung zu ermöglichen (Anspruch 7, 15). Die Anbringung eines Dichtmaterials um die Öffnung herum verbessert den Luftabschluß (Anspruch 5); alternativ oder kumulativ kann der Sperrkörper eine die Abdichtung begünstigende elastische Oberfläche besitzen, z.B. aus Kautschuk oder Polyethylen. Auch der gesamte Körper kann aus diesem Werkstoff bestehen (Anspruch 18).

Wird als Sperrkörper keine Kugel, sondern eine Walze verwendet, kann die Öffnung auch langgestreckt sein, jeweils angepaßt an die Form des Sperrkörpers, so daß dieser aufgrund der Schwerkraft selbsttätig über die Öffnung sich begeben kann und einen wesentlichen Luftabschluß erreicht.

Das weitere Ventil kann T-förmig ausgebildet sein aus Rohrsegmenten und einer Zuströmkammer, die kugelförmig oder zylinderförmig sein kann, um den Sperrkörper als Kugel oder Walze aufzunehmen. Gegenüber dem Zuströmraum ist eine Öffnung insbesondere seitlich vorgesehen, die von einem Stopfen verschlossen sein kann (Anspruch 16, 17).

Dieser Stopfen kann kurz oder lang ausgebildet sein. Ist er länger ausgebildet, vermag er den Übergang zum zweiten Rohrsegment zu verschließen, so daß unabhängig von der Lage des Sperrkörpers keine Luft in das Getränk nachströmen kann.

Wird der lange Stopfen mit einen zusätzlichen Riegel oder einer Versiegelung versehen, so kann dadurch sichergestellt werden, daß keine unbefugte Getränkeentnahme, z.B. außerhalb der Öffnungszeiten der Betriebsstelle, geschieht. Ein Druckausgleich ist dabei nicht mehr möglich, so daß ein einmal aufgebauter Unterdruck dafür sorgt, daß kein weiteres Getränk am Zapfventil abgegeben werden kann.

Die Erfindung wird anhand von Zeichnungen an **Beispielen** näher erläutert:
- **Figur 1**: ist eine Schnittdarstellung eines ersten Ausführungsbeispiels eines Getränkebehälters mit einem eingesetzten Ventil 30 und einem Entnahmeventil 32.
- **Figur 2**: ist eine vergrößere Darstellung des Zuströmventils 30 von Figur 1 (im Schnitt).
- **Figur 3**: ist eine Ausschnittvergrößerung der Öffnung 3, die von dem Sperrkörper 2 im Sperrzustand des Ventils 30 verschlossen ist, wobei aber eine Bewegungsrichtung B eingezeichnet ist, die zur zumindest teilweisen Freigabe der Öffnung eine Veränderung der Lage des Sperrkörpers 2 symbolisiert.

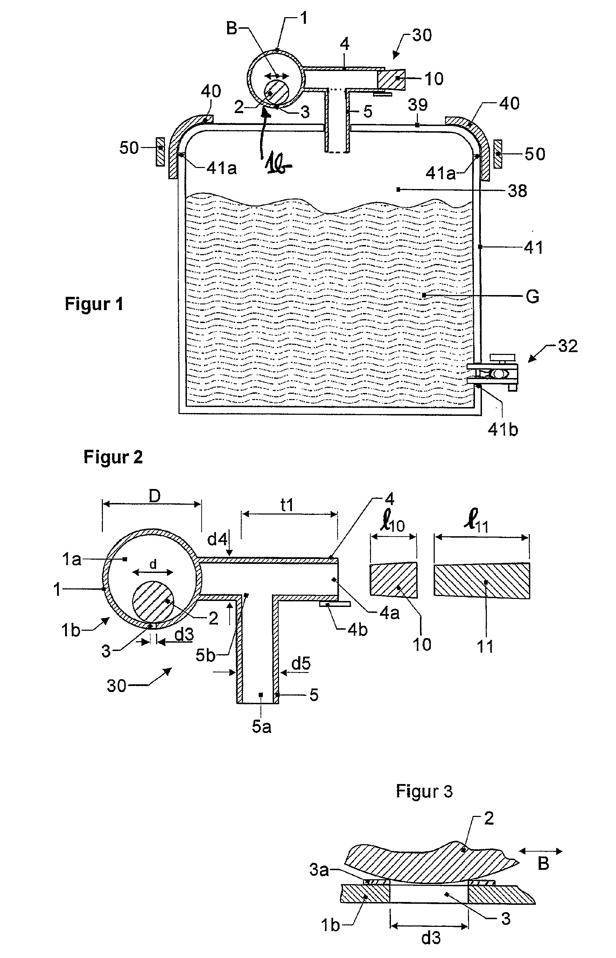

**Figur** 1 veranschaulicht einen Behälterrumpf 41, der mit einem Deckel 39 verschlossen ist und im unteren Bereich eine Entnahmeöffnung 41b aufweist, die mit einem Entnahmeventil 32 versehen ist. Das Entnahmeventil 32 kann zur dosierten Entnahme des Getränkes geöffnet werden und ist ansonsten geschlossen. Das Getränk G findet sich in dem Rumpf 41 mit einer Füllhöhe, wobei der zwischen Füllstand des Getränkes G und dem Deckel 39 verbleibende Raum 38 der Innenraum ist, in dem Unterdruck aufgebaut wird, wenn das Getränk G über das Entnahmeventil 32 entnommen wird. Das weitere Ventil 30 ist im wesentlichen T-förmig ausgestaltet mit einem im wesentlichen horizontal verlaufenden ersten Rohrsegment 4 und einem im wesentlichen vertikal verlaufenden zweiten Rohrsegment 5. An der linken Seite des horizontalen Rohrsegmentes 4 ist eine kugelförmige oder zylindrische Wand zur Schaffung einer Kammer 1 angeordnet, in der eine Sperrkugel 2 über einer Öffnung 3 beweglich angeordnet ist. Die Bewegungsrichtung B entspricht der Möglichkeit des Wegbewegens des Sperrkörpers 2 von der Öffnung 3, sowohl nach links, wie auch nach rechts, aber unter Entstehen einer Rückstellkraft durch Schwerkraft, die zu der niedrigsten potentiellen Energie des Sperrkörpers 2 direkt über der Öffnung 3 führt.

Der Deckel 39 trägt das weitere Ventil 30 luftdicht und das vertikale Rohrsegment ragt durch die horizontale Fläche des Deckels 39, der an einer Nahtstelle 41a auf dem Rumpf 41 aufliegt. Um die Nahtstelle luftdicht abzuschließen, ist eine Abdichtung 40 entsprechend der Form des Deckels 39 im Nahtbereich und des Rumpfes 41 ebenfalls im Nahtbereich vorgesehen. Sie ist zusätzlich flankiert von einer Verriegelung 50, die schematisch dargestellt ist und den Deckel auf dem Rumpf hält.

Die Funktion des Ventils 30 kann anhand einer Zusammenschau der **Figuren 1 und 2** erläutert werden. Ein Öffnen des Hahnes 32 läßt Getränk ausfließen und die Füllhöhe des Getränkes G sinkt. Dadurch entsteht ein Unterdruck im Kopfraum 38, der die Kanalstruktur der Rohrsegmente 4,5 und den Zuströmraum 1 mit dem Sperrkörper 2 erreicht. Ein Mindestmaß an Unterdruck sorgt für eine Kraftwirkung an dem Sperrkörper 2, der seine Ruhelage über der Öffnung 3 verläßt. Dadurch entsteht ein Spalt einer Öffnung, die an **Figur 3** am besten ersichtlich ist. Dieser Spalt läßt Luft durch einen Teil der Öffnung hindurchströmen, so daß die zuströmende Luft über den Innenraum 1a, ein Kanalstück des Rohres 4 und das Rohrsegment 5 in den Kopfraum 38 gelangt. Es findet ein Druckausgleich statt, der eine Rückstellkraft auf die Kugel 2 dann ermöglicht, wenn der Hahn 32 geschlossen wird. Die Kugel 2 bewegt sich dann, wie in Figur 3 ersichtlich, erneut in die Ruhelage über die Öffnung 3.

Die genauere Gestaltung des Ventils 30 ist in **Figur 2** ersichtlich. Ein kugelförmiger oder zylindrischer Raum 1a ist umgeben von einer entsprechenden Gestaltung einer zylindrischen oder kugelförmigen Wand oder Kugelschale 1, die einen Boden 1b aufweist, in dem die Öffnung 3 an ihrer tiefsten Stelle angeordnet ist. Die dadurch ausgebildete Krümmung ist schwächer als diejenige Krümmung der Oberfläche des Sperrkörpers 2, dessen Durchmesser d deutlich kleiner, insbesondere etwa 1/10 bis 1/4 so groß ist, wie der Durchmesser D der Zuströmkammer 1a, die als Zylinder oder Kugel ausgeführt sein kann. Durchmesser d im Bereich 1/2 cm bis 1 cm und D im Bereich 4 cm bis 6 cm sind günstig.

Im Anschluß an die Sperrkammer ist ein Rohrsegment 4 vorgesehen, das an einem Zwischenbereich 5b ein davon im wesentlichen vertikal abragendes zweites Rohrstück 5 besitzt. Beide Rohrstücke enden mit einer Öffnung 4a bzw. 5a. Der Durchmesser d4 des ersten Rohrstücks 4 ist kleiner als der Durchmesser D der Zuströmkammer und der Durchmesser d5 des zweiten Rohrstücks ist maximal so groß, wie der Durchmesser d4 des ersten Rohrstücks.

Im Verbindungsbereich 5b ist eine freie Strömung möglich. Die Öffnung 4b ist im Normalbetrieb von einem Stopfen 10 verschlossen. Der Stopfen 10 hat eine Länge l₁₀, die kürzer ist, als der Abstand des Endes 4a von dem Verbindungsabschnitt 5b, der zuvor beschrieben war.

Der Verschluß 10 ist in Figur 1 im eingesetzten Zustand zu sehen, bei dem es nur noch eine Strömungsverbindung von der Öffnung 3 über den Zuströmraum 1a, ein Kanalstück des Rohres 4 und dem Kanal des Rohres 5 zum Innenraum 38 gibt.

Wird ein längeres Verschlußstück 11 verwendet, dessen Länge l₁₁ so groß ist, daß der Frontbereich dieses Verschlusses über die Koppelstelle 5b bis über t1 hinausreicht, kann damit der Zuströmweg für die Luft gänzlich abgeschlossen werden, unabhängig von der Lage der Ventilkugel 2 als Sperrkörper. Eine solche Verwendung bietet die Möglichkeit, unbefugte Getränkeentnahme zu verhindern durch Aufbau von Unterdruck im Kopfraum 38, z.B. außerhalb der Öffnungszeiten des Betreibers des Getränkebehälters.

Eine zusätzliche Verriegelung 4b, die auch eine Versiegelung sein kann, betrifft den Verschluß 10, der damit vor unerlaubten Eingriffen bzw. mutwilliger Kontamination des Kopfraumes 38 geschützt ist. Ein Aufbrechen der Versiegelung oder ein Zerstören der Verriegelung ist evident und kann anzeigen, daß ein Unbefugter am Werk war.

In der Vergrößerung der Figur 3 ist der Boden 1b aufgrund des gezeigten Ausschnitts nicht mehr gekrümmt dargestellt, aber die Krümmung der die Öffnung 3 mit einem Durchmesser d3 verschließenden Kugel 2 ist deutlicher ausgeprägt. Die Kugel 2 liegt dabei auf einem Ringbereich 3a, der aus Dichtmaterial gefertigt ist. So wird ein besserer Luftabschluß in der Ruhelage der Kugel möglich. Die Bewegung B findet statt, wenn ein Unterdruck im Kopfraum 38 aufgebaut wird, wobei sie sowohl nach links oder nach rechts erfolgen kann, auch als Schaukelbewegung.

Es ist ersichtlich, daß eine Bewegung B erst zeitversetzt mit dem Öffnen des Ventils 32 stattfindet, ebenso wie die Rückstellbewegung nach Schließen des Ventils 32 hinsichtlich der Ventilkugel 2 ebenfalls zeitverzögert stattfindet. Nach einem solchen Schließen ist der Behälter aus Rumpf 41 und starrem Deckel 39 völlig luftdicht abgeschlossen, zumindestens praktisch luftdicht abgeschlossen, so daß die Oberfläche des Getränkes nicht mit neuer, gegebenenfalls belasteter Umgebungslust in Berührung kommt. Die Qualität und das Aroma des Getränkes können beibehalten werden, auch bei langer Lagerung.

Der Durchmesser d der Sperrkugel ist kleiner als der Durchmesser d4 des horizontal liegendes Rohrabschnittes, um die Kugel durch die Öffnung 4a bei der Herstellung des Ventils einführen zu können. Hinsichtlich des Durchmessers d5 besteht diese Maßgabe nicht, d5 kann auch kleiner sein als der Durchmesser d4.

Der Werkstoff der Kugel (vollinhaltlich oder nur an einer Oberfläche bis zu einer prozentualen Tiefe des Durchmessers) ist elastisch nachgiebig (weich), um die Öffnung 3 durch das Eigengewicht abdichtend zu verschließen.

Als Werkstoff eignet sich ein Silikon oder Kautschuk, insbesondere Silikonkautschuk oder ein Polyethylen.

Von den Maßen her ist die Größe d auf die Größe d3 der Öffnung 3 abgestimmt, im Bereich zwischen doppelt und vierfach so groß, um die Krümmung der Oberfläche des Sperrkörpers 2 deutlich größer zu gestalten, als diejenige des Bodens 1b der Kammer 1a. Ein Wert im Bereich grösser 2 (d3 < 50% von d) ist günstig.

## Patentansprüche

1. **Behälter** für ein flüssiges Getränk (G) mit einem einen Innenraum (38) bildenden Rumpf (41), der mit einem Deckel (39) verschlossen ist und im unteren Bereich eine Entnahmeöffnung (41b) aufweist, die mit einem Entnahmeventil (32) versehen ist, das zur Entnahme des Getränks geöffnet und ansonsten geschlossen ist;
**dadurch gekennzeichnet, daß**
dem Behälter, insbesondere dem Deckel (39), ein weiters Ventil (30) zugeordnet ist, das bei geöffnetem Entnahmeventil (32) den Durchtritt von Luft zum Innenraum (38) freigibt (3) und bei geschlossenem Entnahmeventil (32) den Durchtritt von Luft zum Innenraum sperrt (2).

2. Behälter nach Anspruch 1, wobei die beiden Ventile (32,30) unabhängig voneinander sind, aber über den Druck im Innenraum (38) gekoppelt sind.

3. Behälter nach Anspruch 1, wobei der Durchtritt von Luft durch eine von einem beweglichen Sperrkörper (2) freigegebene Öffnung (3) im weiteren Ventil erfolgt.

4. Behälter nach Anspruch 1 oder 3, wobei das Sperren des Luftdurchtritts durch ein Schließen einer Öffnung (3) mit einem beweglichen Sperrkörper (2) erfolgt.

5. Behälter nach Anspruch 1, wobei eine insbesondere kreisförmige Öffnung (3) im weiteren Ventil (30) angeordnet ist und von einem Dichtmaterial (3a) umgeben ist.

6. Behälter nach Anspruch 1, wobei ein Sperrkörper (2) in einem Zuströmraum (1a) gelegen ist und an einem Boden (1b) des Zuströmraums eine Öffnung (3) angeordnet ist.

7. Behälter nach Anspruch 6, wobei der Boden des Zuströmraums (1a) gekrümmt ist, insbesondere der Zuströmraum (1a) von einer Kugelschale (1) oder einem Zylinder umgeben ist.

8. Behälter nach Anspruch 7, wobei der Sperrkörper eine größere Krümmung seiner Oberfläche aufweist, als der Boden (1b) des Zuströmraums (1a).

9. Behälter nach Anspruch 1, wobei der Deckel im wesentlichen unnachgiebig, insbesondere starr ist.

10. Behälter nach Anspruch 1 oder 9, wobei der Deckel mit dem Rumpf (41) durch Auflegen verbunden ist und eine Nahtstelle (41a) zwischen Rumpf und Deckel von außen mit einer umlaufenden Abdichtung (40) im wesentlichen luftdicht verschlossen bzw. abgedeckt ist.

11. Behälter nach Anspruch 1, wobei Deckel und Rumpf mit einer lösbaren Verriegelung (50), insbesondere über der Abdeckung nach Anspruch 10 gekoppelt sind.

12. Behälter nach Anspruch 1, wobei der Durchtritt von Luft zum Innenraum (38) zeitverzögert nach dem Öffnen des Entnahmeventils erfolgt, und wobei der Behälter eine Flüssigkeit enthält, die über das Entnahmeventil (32) dosiert abgebbar ist.

13. Behälter nach Anspruch 1, der bei geschlossenem Entnahmeventil (32) vollständig luftdicht abgeschlossen ist.

14. Behälter nach Anspruch 3, 4, 6 oder 8, wobei der Sperrkörper eine Kugel (2) oder Walze ist.

15. **Behälter** für ein flüssiges Getränk (G) mit einem - einen Innenraum (38) bildenden - Rumpf (41) und zumindest zwei Ventilen (32,30), wobei eines der Ventile den Durchtritt von Luft zum Innenraum (38) freigibt, wenn das andere Ventil (32) geöffnet wird und ein Sperrkörper (2) sowie ein Boden (1b) eines Innenraums (1a) des im Abhängigkeitsverhältnis geöffneten einen Ventils (30) eine solche Formgebung aufweisen, daß sich der Sperrkörper (2) aufgrund von Schwerkraft selbsttätig über eine Öffnung (3) in dem einen Ventil begibt, um nach Schließen des anderen Ventils (32) einen Luftabschluß zu erreichen.

16. Behälter nach Anspruch 1, wobei das weitere Ventil (30) einen Verschluß (10,11) aufweist, der mit einer Verriegelung oder Versiegelung (4b) versehen ist, um eine Sicherheit gegen unerlaubte Eingriffe zu erhalten.

17. Behälter nach Anspruch 1, wobei das weitere Ventil einen Verschluß aufweist, der so ausgebildet ist (11,l₁₁) den möglichen Zutritt von Luft durch eine Öffnung (3) in den Innenraum (38) ganz zu sperren, um eine unbefugte Getränkeentnahme zu sperren, durch Aufbau von Unterdruck in dem Innenraum (38).

18. Behälter nach Anspruch 1 oder 15, wobei der Sperrkörper (2) zumindest außenseitig aus insbesondere nachgiebigem Kunststoff besteht.

19. Behälter nach Anspruch 1 oder 15, wobei die Öffnung (3) eine Abmessung (d3) besitzt, die 20% bis 60%, insbesondere im wesentlichen 50% der Abmessung (d) des Sperrkörpers (2) beträgt.

20. **Zuströmventil** für einen Behälter nach Anspruch 1, bestehend aus zwei Rohrsegmenten (4,5), die miteinander zur Ausbildung einer freien Luftströmung an einer Verbindungsstelle gekoppelt sind (5b), wobei an dem einen Rohrsegment (4) eine Kammer (1a) angeordnet ist, die zumindest einen gekrümmten Boden (1b) mit einer Öffnung (3) aufweist und in der ein Sperrkörper (2) beweglich angeordnet ist, dessen Abmessung (d)
- größer als das maximale lichte Maß - insbesondere eines Durchmessers (d3) - der Öffnung (3) ist;
- kleiner als ein lichtes Maß - insbesondere eines Durchmessers (D) - der Kammer ist.

21. Zuströmventil nach Anspruch 20, wobei ein Rohrende (4a) des einen Rohrsegments (4) mit einem Stopfen (10,11) im wesentlichen luftdicht verschließbar ist.

22. Zuströmventil nach Anspruch 21, wobei der Stopfen (11) eine Länge (l₁₁) aufweist, die im eingesetzten Zustand bis über einen Eintrittsbereich an der Koppelstelle (5b) des anderen Rohrsegments (5) hinausreicht.

23. Zuströmventil nach Anspruch 20, wobei die Öffnung (3) im wesentlichen rund ist.

24. Ventil nach Anspruch 20, wobei der Sperrkörper als Sperrkugel (2) oder Walze lose in der Kammer (1a) liegt.

25. Zuströmventil nach Anspruch 20, wobei die Kammer von einer Kugelschale oder einem Zylindersegment (1) begrenzt ist, das an dem einen der Rohrsegmente (4) fest angeordnet ist.

26. Ventil nach Anspruch 20, wobei die Rohrsegmente (4,5) T-förmig angeordnet sind und an einem Endabschnitt des T-Querbalkens die Kammer mit einer freien Durchströmmöglichkeit für Luft fest angeordnet ist.

27. Ventil nach Anspruch 20, wobei ein erster Durchmesser (d4) des einen Rohrsegments (4) größer ist als ein zweiter Durchmesser (d) des Sperrkörpers (2).

28. Ventil nach Anspruch 27 oder 20, wobei der erste Durchmesser (d4) des einen Rohrsegments (4) kleiner als ein dritter Durchmesser (D) der Kammer (1a) ist.

29. Zuströmventil nach Anspruch 20, wobei die Öffnung (3) von einem Dichtmaterial (3a) umgeben ist, das bei einem aufliegenden Sperrkörper (2) mit einem Stück seiner Oberfläche einen umlaufenden Dichtbereich um die Öffnung (3) bildet, zum Sperren des Zutritts von Luft in die Kammer.

30. **Verfahren** zum zeitlich begrenzten Zuführen von Luft in einen Innenraum (38) eines Getränkebehälters, der mit einer Flüssigkeit (G) gefüllt ist, wobei ein erstes Ventil (32) zum Abgeben der Flüssigkeit am Behälter angeordnet ist und nach seinem Öffnen Luft von außen durch das andere Ventil (30) in den Innenraum (38) strömt, aber der Zustrom der Luft gesperrt wird und ein Luftabschluß vom weiteren Ventil gebildet wird, wenn und nachdem das erste Ventil (32) geschlossen wird.

31. Verfahren nach Anspruch 30, wobei die beiden Ventile über den Druck im Innenraum (38) gekoppelt sind.

32. Verfahren nach Anspruch 30, wobei die beiden Ventile zeitversetzt öffnen bzw. geöffnet werden und zeitversetzt schließen bzw. geschlossen werden.
